**Europäisches Patentamt**

(19) **European Patent Office**

**Office européen des brevets**

(11) Publication number : **0 379 576 B1**

## (12) EUROPEAN PATENT SPECIFICATION

(45) Date of publication of patent specification :
**05.08.92 Bulletin 92/32**

(51) Int. Cl.[5] : **C04B 38/00, C04B 35/18, B28B 1/26**

(21) Application number : **88902219.0**

(22) Date of filing : **26.02.88**

(86) International application number :
**PCT/JP88/00214**

(87) International publication number :
**WO 89/08089 08.09.89 Gazette 89/21**

(54) **GAS-PERMEABLE POROUS BODY, ITS PRODUCTION AND PRESSURE CASTING MOLD.**

(43) Date of publication of application :
**01.08.90 Bulletin 90/31**

(45) Publication of the grant of the patent :
**05.08.92 Bulletin 92/32**

(84) Designated Contracting States :
**AT BE CH DE FR GB IT LI LU NL SE**

(56) References cited :
**EP-A- 0 234 360
FR-A- 2 601 894
FR-A- 2 601 895
JP-B- 494 803
US-A- 3 156 751
US-A- 3 993 727
CHEMICAL ABSTRACTS, vol. 109, no. 10, September 1988, page 329, abstract no. 78585h, Columbus, Ohio, US;& JP-A-63 107 876(INAX CORP.) 12-05-1988**

(73) Proprietor : **INAX CORPORATION**
**306, Koiehonmachi**
**Tokoname-Shi Aichi 479 (JP)**

(72) Inventor : **MURAGUCHI, Yukito**
**Inax Corporation 3-6, Koiehonmachi**
**Tokoname-shi Aichi 479 (JP)**
Inventor : **TAKAHASCHI, Hiroaki**
**Inax Corporation Enokido Factory**
**3-77, Minatocho Tokoname-shi Aichi 479 (JP)**

(74) Representative : **Jenkins, Peter David et al**
**PAGE, WHITE & FARRER 54 Doughty Street**
**London WC1N 2LS (GB)**

EP 0 379 576 B1

## Description

The present ivention relates to a porous body of ceramics having a uniform pore diameter, a process for producing the same, and a pressure casting mold made of said porous body.

Air-permeable porous bodies of ceramics have been in practical use as filters and aerators in various fields including food industry, water treatment, and culture on account of their air permeability and chemical stability. The conventional porous bodies of ceramics are produced by various processes which are classified as follows according to their principles.

### I. One that forms pores before firing

(1) By mixing the raw materials for ceramics with the raw materials for polyurethane foam, then foaming the mixture, and firing the foam to remove the resin thereafter.

(2) By coating a polyurethane foam with a ceramics slurry and firing the foam.

(3) By packing resin granules into a container, pouring a ceramics slurry into the space between the granules, and firing the entire system.

### II. One that forms pores during firing

(4) By suspending sintering before vitrification.

(5) By firing the ceramics raw materials together with a combustible or volatile material

(6) By fig classified filler particles together with a small amount of vitreous flux and binder.

(7) By firing a porous raw material such as diatomaceous earth together with a binder.

### III. One that forms pores by phase separation of glass (porous glass)

### IV. One that is based on sol-gel process (silica gel etc.)

### V. One that forms pores utilizing voids in crystals (zeolite etc.)

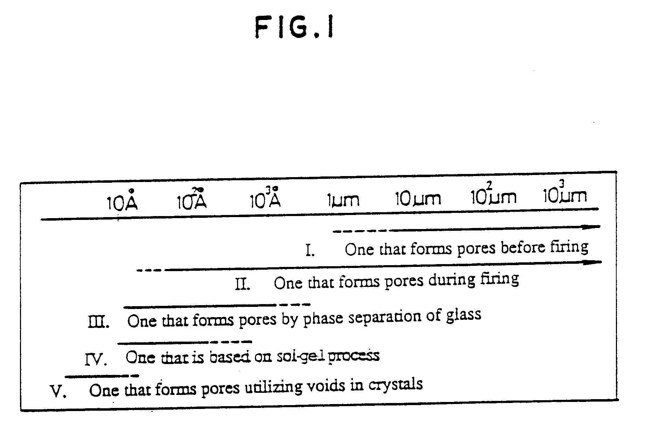

The porous bodies prepared by these processes have pore radii distributed over different ranges as shown in Fig. 1.

The above-mentioned processes have their merits and demerits. Process (II) which forms pores during firing is most suitable for producing versatile porous bodies having a pore radius of 0.3 to 50 $\mu$m. However, process (4) yields porous bodies having a high porosity only with difficulty and tends to yield porous bodies which are brittle and have irregular pores. Process (5) is suitable for the economical production of porous bodies, but is liable to yield porous bodies which are brittle and have irregular pores. Process (7) is not industrially advantageous. Therefore, process (6) has been predominant in the industry.

Unfortunately, process (6) needs many steps and hence does not yield porous bodies efficiently at a low cost. According to this process, it is necessary to control the average particle size and particle size distribution of the filler(such as porcelaneous chammotte, alumina, titania, and silicon carbide) and to mix the filler with a minimum of vitreous flux (to bind the filler during firing) and binder (such as clay).

It is an object of the present invention to provide an inexpensive air-permeable porous body having a uniform pore diameter and also to provide a process for producing such a porous body. The process does not need the classification step to control the particle size distribution of the filler, unlike the above-mentioned process (6). Moreover, it does not need any vitreous flux and combustible material (such as sawdust). The process permits the use of cheap naturally occuring raw materials and utilizes the glass phase and its sintering which occur during firing.

There are many pressure casting methods for forming ceramic bodies. Drain casting is one of them. According to this method, slip is poured into a dry gypsum mold which rapidly absorbs the added water, producing a solid body which has the inside shape of the mold. When the desired wall thickness of the cast item is attained, the excess slip is poured from the mold. The cast item is held in the mold for further absorption of remaining water until it is dried to sufficient strength for safe handling. The cast item is finally removed from the mold for subsequent processing. (There is also a pressure casting method which does not include the step of pouring the slip from the mold.)

A disadvantage of the conventional method mentioned above is that the dried gypsum mold is limited in water absorption capacity. In other words, each mold turns out only two cast items in hours. In addition, the used gypsum mold takes 6 to 18 hours to dry for reuse, and the drying of the used gypsum mold shortens the

2

life of the gypsum mold. All this makes the gypsum mold poor in productivity per unit time and increases the production cost of the cast items.

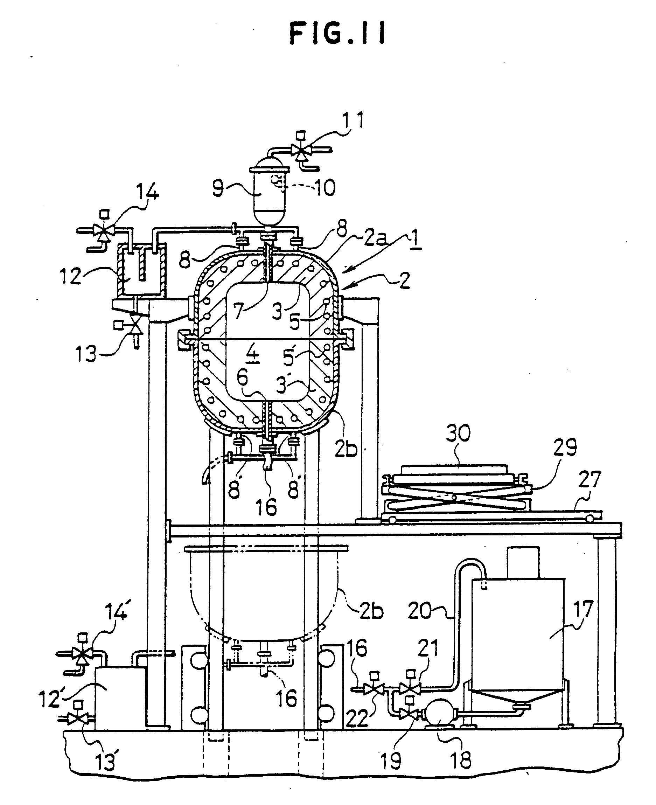

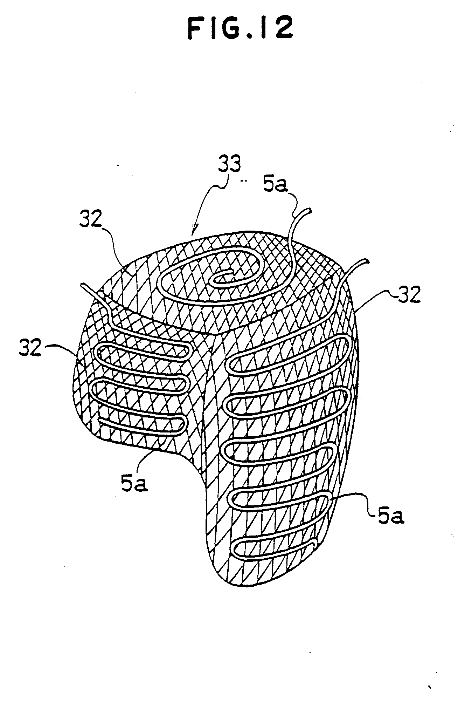

In order to eliminate the above-mentioned disadvantages, the present inventors developed a casting mold made of porous synthetic resin of open-cell structure instead of gypsum (as disclosed in, for example, Japanese Patent Laid-open No. 208005/1983). This synthetic resin mold is prepared and used for drain casting in the manner briefly explained below with reference to Figs. 11 and 12.

In Fig. 11, there is shown the casting mold *1* which is made up of the pressure container *2* and the internal molds *3* and *3'* made of porous synthetic resin of open cell structure. The internal molds *3* and *3'* are provided with the drain tubes *5* and *5'* which lead to the outside of the casting mold *1*. The drain tubes *3* and *3'* are made of, for example, woven cotton cloth and are 2 to 20 mm in outside diameter, so that they pass water with much smaller resistance than the internal molds *3* and *3'*.

The internal molds *3* and *3'* are prepared in the following manner. At first, a model is provided which is similar to and slightly larger than the desired cast item. The difference in size equals the distance (say, 20 to 100 mm) between the inside of the internal molds *3* and *3'* and the drain tubes *5* and *5'*. Then, a wire net is pressed against the surface of the model so that the wire net *32* (as shown in Fig. 12) is obtained which has a shape corresponding to that of the internal molds *3* and *3'*. On the thus formed wire net *32* are arranged drain tubes *5a* at proper intervals (say, 5 to 100 mm), as shown in Fig. 12. The drain tubes *5a* are fixed to the wire net *32* with a proper means (such as wire). The shaped wire net *33*, with tube *5a* attached, is placed in the upper part *2a* and the lower part *2b* of the pressure container *2*. The ends of the drain tubes *5a* are inserted into the external pipes *8* and *8'* which open in the pressure container *2*. With the pressure container *2* opened, the model of cast item is placed in the lower part *2b* of the pressure container *2* and the space between the model and the lower part *2b* is filled with a flowable molding compound of synthetic resin, followed by curing. The lower part *2b* is engaged with the upper part *2a*. The space between the model and the upper part *2a* is filled with the same flowable molding compound of synthetic resin as mentioned above, followed by curing. The pressure container *2* is opened and the model is removed. Thus the internal molds *3* and *3'* having the drain tubes *5* and *5'* are completed in the pressure container *2*. Incidentally, if the molding compound of synthetic resin is heated to an adequate temperature after it has cured to a certain extent, the molding compound releases water and emulsifier, forming open cells.

The drain casting apparatus equipped with the casting mold *1* is operated for drain casting in the following manner. At first, the upper part *2a* and lower part *2b* of the pressure container *2* are engaged with each other. The cavity *4* in the pressure container *2* is filled with slip fed through the valves *19* and *22*, the flexible pipe *16*, and the slip sluppy pipe *6* under pressure by the pump *18*. When slip is being fed, the valve *11* is kept open so that slip can overflow through the overflow pipe *7* into the overflow tank *9*. When the overflow of the slip is detected by the level detector *10*, the pupm *18* is stopped and the valve *22* is closed. Then, the valve *11* is turned so that compressed air (5 to 15kg/cm$^2$) is introduced into the overflow tank *9*. The compressed air applies pressure to the slip in the cavity *4*. At the same time, the valves *13* and *13'* are opened so that the air-water separators *12* and *12'* is equilibrated with the atmospheric pressure, of the valves *13* and *13'* are closed and the valves *14* and *14'* are properly positioned so that the air-water separators *12* and *12'* are depressurized to, say 300 to 700mmHg.(x 1,33·10$^2$Pa) The slip under pressure in the cavity *4* rapidly settles on the surface of the internal molds *3* and *3'* because the water in the slip oozes out to the drain tubes *5* and *5'* through the internal molds *3* and *3'*.

When a desired wall thickness (say, 9 mm) is attained after a prescribed time (say, 9 minutes), the valve *11* is turned so as to release the pressure of the overflow tank *9*. With the valves *22* and *21* opened, the excess slip in the cavity *4* is returned to the slip tank *17* through the slip sluppy pipe *6*, the flexible pipe 16, the valves *22* and *21*, and the slip return pipe *20*. After the excess slip has been drained, the valve *22* is closed and the valve *11* is turned so that compressed air is supplied to the overflow tank *9*, if necessary. The compressed air presses the wall of the cast item again to uniformly lower the water content of the cast item.

While the excess slip is being drained and the wall of the cast item is being pressed again, the air-water separators *12* and *12'* are kept equilibrated with the atmospheric pressure or depressurized. Then, the air-water separator *12* is depressurized. With the valve *13'* and the valve *14'* turned, compressed air is introduced into the air-water separator *12'*. The compressed air forces out the residual water in the internal mold *3'* so that water film is formed at the interface between the surface of the internal mold *3'* and the wall of the cast item. The lower part *2a* of the pressure container *2* is lowered, with the cast item held in position by the internal mold *3*. The truck *27* is moved to the position under the cast item, and the table lifter *29* is raised until the table *29* gets near the bottom of the cast item. The valve *14* is turned so that compressed air is introduced into the air-water separator *12*. The compressed air applies pressure to the drain tube *5*, forcing out the residual water in the internal mold *3* and forming water film at the interface between the surface of the internal mold *3* and the wall of the cast item. The water film permits the cast item to fall spontaneously onto the table *30*. The table lifter 29 is lowered and the truck 27 is retracted to the standby position. Thus there is obtained a hollow cast item which is placed on the table 30.

An advantage of the above-mentioned drain casting method is that the internal mold made of synthetic resin is dimensionally stable, with very little shrinkage resulting from curing, and hence the cast item has high dimensional accuracy, even after repeated casting cycles. Another advantage is that the internal mold has good water resistance, mechanical properties, wear resistance, and chemical resistance.

Unfortunately, the above-mentioned synthetic resin mold suffers from a disadvantage that it is impossible to apply the pneumatic pressure or hydraulic pressure uniformly to the mold surface when the cast item is removed from the mold, because the diameters of the pores are broadly distributed. This disadvantage is serious particularly when the cast item has a projected part, as in the case of sanitary ware. The projected part is not easily removed from the hollow part of the mold.

It is an object of the,present invention to provide a pressure casting mold which permits easy demolding without any damage to the cast item.

The air-permeable porous body of the present invention comprises 70 to 88 wt% of $SiO_2$, 5 to 23 wt% of CaO, and 5 to 15 wt% of $Al_2O_3$.

According to the present invention, the air-permeable porous body is produced by mixing siliceous agalmatolite, limestone, and clay to give a compound composed of 70 to 88 wt% of $SiO_2$, 5 to 23 wt% of CaO, and 5 to 15 wt% of $Al_2O_3$, casting the compound, and and the cast item at 1000°C or above.

The drain casting mold of the present invention is made of the air-permeable porous body. The mold comprises the inner surface layer which forms the mold surface, the support layer which is in close contact with the surface layer, supporting the surface layer, and the drains formed in the vicinity of the interface between the support layer and the surface layer, said drains communicating with the surface layer.

The end of the drain is led to the outside of the drain casting mold, so that water in the surface layer can be discharged from the drain casting mold and gas or liquid on the surface layer can be discharged through the drains and surface layer from the drain casting mold. The surface layer is made of the above-mentioned porous body.

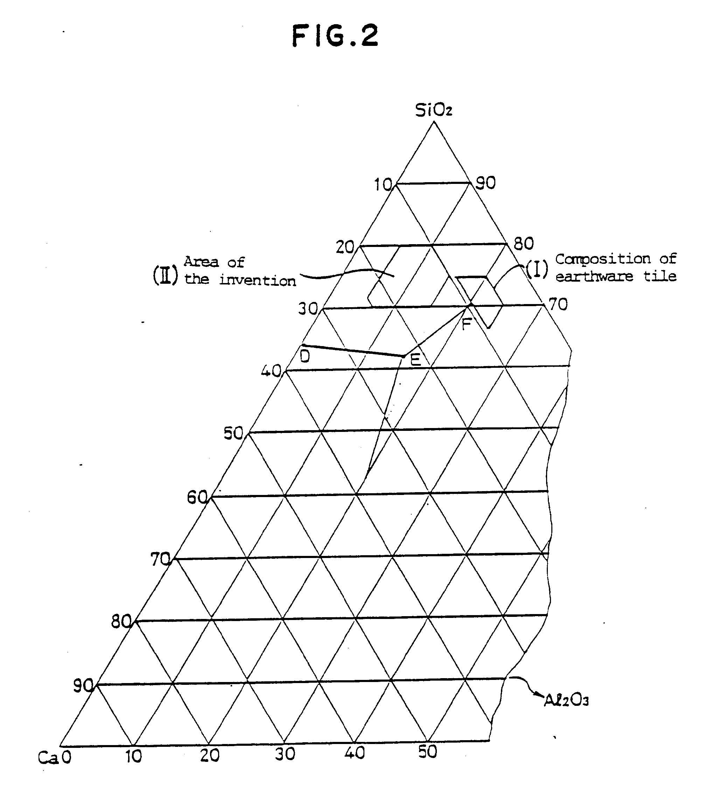

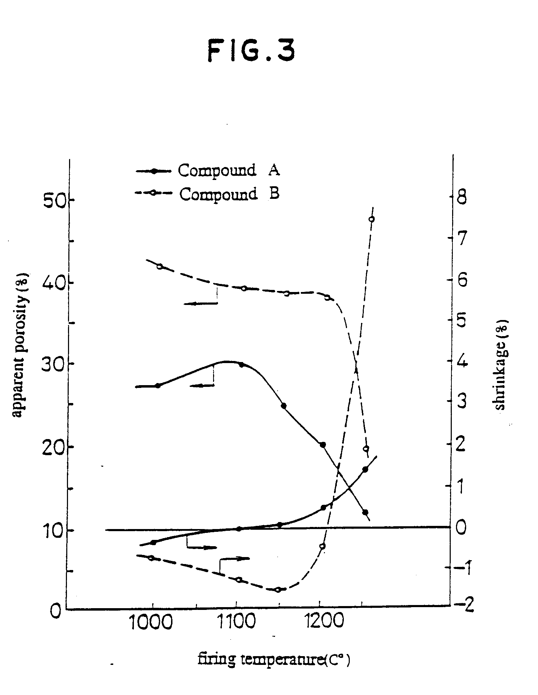

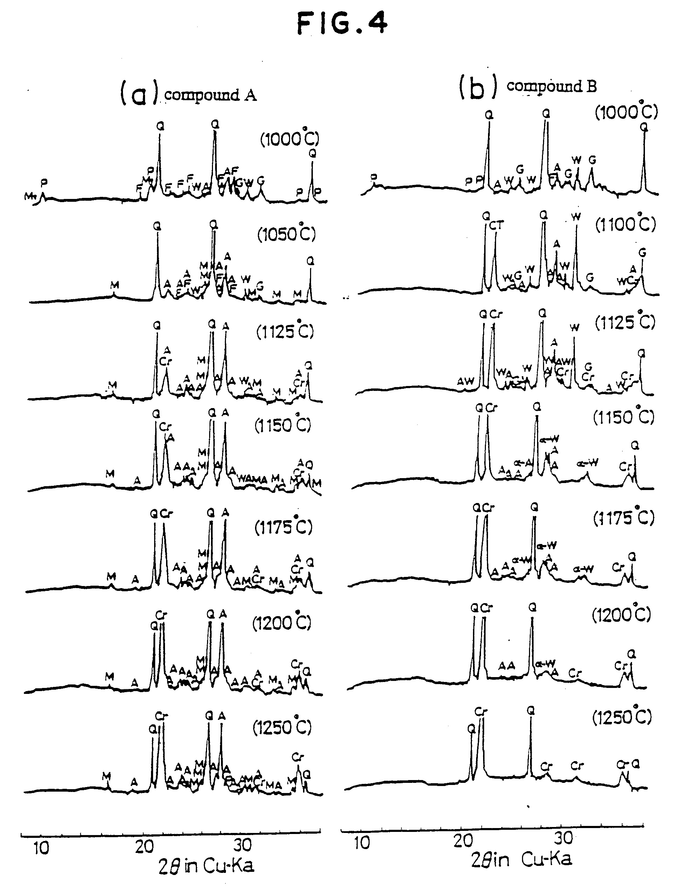

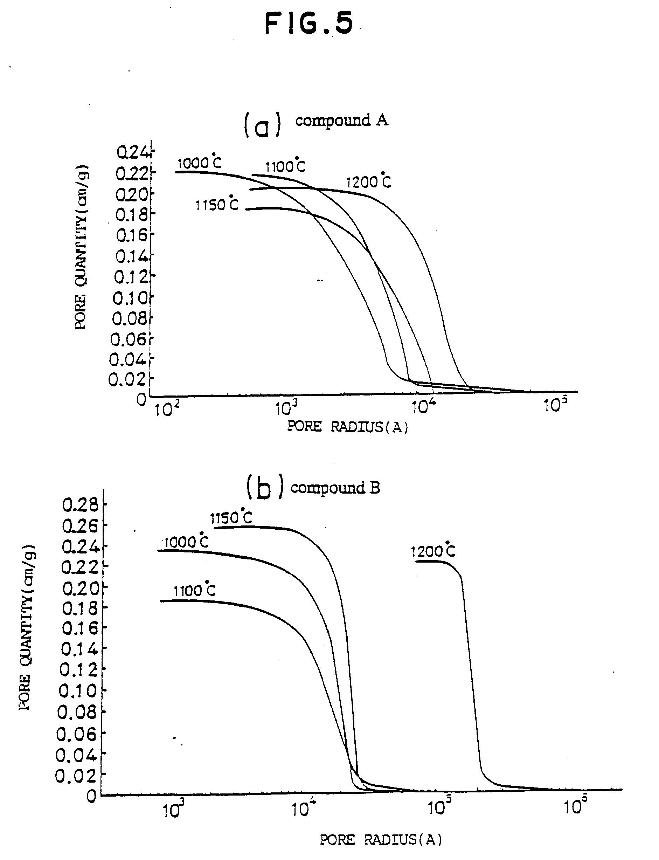

The present invention was made as the result of investigation on the $CaO$-$Al_2O_3$-$SiO_2$-based tile body. The investigation is explained in the following. Of the $CaO$-$Al_2O_3$-$SiO_2$-based ceramic whiteware, earthware tile is a typical one. The body of earthware tile is composed of 58 to 75 wt% of $SiO_2$, 13 to 25 wt% of $Al_2O_3$, and 5 to 9 wt% of CaO (as indicated by the area (I) in Fig. 2). It is prepared from agalmatolite (pyrophyllite type or kaolin type, containing more than 13 wt% of $Al_2O_3$), limestone, and clay. An example of the compound conforming to the area (I) in Fig. 2 is composed of 73 wt% of $SiO_2$, 20 wt% of $Al_2O_3$, and 7 wt% ot CaO. This compound (referred to as compound A hereinafter) gave an apparent porosity and shrinkage as shown in Fig.3. An example of the compound whose composition is outside the area (I) in Fig.2 was prepared from siliceous agalmatolite (pyrophyllite type or kaolin type, containing less than 13 wt% of $SiO_2$), limestone, and clay. This compound (referred to as compound B hereinafter) is composed of 74 wt% of $SiO_2$, 12 wt% of $Al_2O_3$, and 14 wt% of CaO. It gave a porosity and shrinkage as shown in Fig. 3. Compounds A and compound B were examined for X-ray diffraction pattern. The results are shown in Fig. 4. Compound A and composed B were also examined for pore diameter distribution at different fig temperatures. The results are shown in Fig. 5.

Figs. 3 to 5 show the following: Fig. 3 indicates that compound B gave a greater porosity and a smaller shrinkage than compound A when the firing temperature is lower than 1200°C. Fib. 4 indicates the following: Both compound A and compound B form gehlenite ($2CaO \cdot Al_2O_3 \cdot SiO_2$, wollastonite ($CaO \cdot SiO_2$), and anorthite ($CaO \cdot Al_2O_3 \cdot 2SiO_2$) when the firing temperature is 1000°C. In the case of compound A, as the firing temperature rises, gehlenite and wollastonite disappear and anorthite is formed in large quantities, and mullite ($3Al_2O_3 \cdot 2SiO_2$) and cristobalite ($SiO_2$) also increase. In the case of compound B, gehlenite, wollastonite, and anorthite are formed as in compound A, but wollastonite is formed in a larger quantity than in compound A. However, they tend to decrease as the firing temperature rises.

Incidentally, the symbols in Fig. 4 have the following meanings.

Q ... quartz                     C ... calcite

F ... feldspar                   M ... mullite

P ... pyrophyllite               G ... gehlenite

Cr ... cristobalite              W ... wollastonite

α-W ... α-wollastonite           A ... anorthite

It is known that in the case of compound A which has a composition specified by the area (II) shown in Fig. 2, expansion usually takes place temporarily, increasing the porosity and decreasing the shrinkage, in the course of formation and disappearance of gehlenite and wollastonite. (This property is utilized to improve the dimensional accuracy of interior earthware tile.) In the case of compound B, too, expansion takes place temporarily, increasing the porosity. It is noted from Fig. 5 that the pore radius increases in proportion to the firing temperature in both cases of compound A and compound B; however, there is a difference between them in that the distribution of pore radii becomes narrower as the pore radius increases in the case of compound B.

The reason why compound B yields a porous body having very uniform pore radii is elucidated as follows: Limestone ($CaCO_3$), pyrophyllite, and kaolin mineral in compound B decompose to give CaO, $Al_2O_3$, and $SiO_2$, respectively. These decomposition products react with one another to form gehlenite, wollastonite, and arnothite. As these reaction products disappear, a liquid phase of low melting point occurs partially on account of the eutectic reaction (indicated by point E in Fig. 2), and this liquid phase combines with particles of quartz ($SiO_2$), with a portion thereof transformed into cristobalite. By contrast, compound A yields a porous body having a broad pore size distribution. This may be attributed to the fact that there is a large amount of anorthite in the reaction products, which prevents the eutectic reaction.

In search of the composition which exhibits the same property as compound B, the present inventors carried out experiments with a variety of compounds composed of siliceous agalmatolite, limestone, and clay. The experiments led to the following findings.

i) A compound having a composition indicated by point E in Fig. 2 yields a porous body having a low porosity, because the eutectic reaction rapidly proceeds at 1100°C or above.

ii) A compound having a composition indicated by point D in Fig. 2 yields a porous body having a high porosity. However, the porous body is uneven in pore radius and is also brittle.

iii) A compound having a composition indicated by point F in Fig. 2 yields a porous body having a low porosity and uneven pore radii.

iv) A compound composed mainly of $SiO_2$ yields a porous body haring a high porosity; however, the porous body tends to be brittle.

The present inventors carried out extensive studies on the basis of the above-mentioned findings. The results of the studies indicate that the desirable porous body is obtained from a compound composed of 70 to 88 wt% of $SiO_2$, 5 to 23 wt% of CaO, and 5 to 15 wt% of $Al_2O_3$, prefeiably (from the standpoint of porosity, pore uniformity, and brittleness) 70 to 80 wt% of $SiO_2$, 10 to 23 wt% of CaO, and 5 to 15 wt% of $Al_2O_3$, as indicated by the area (II) in Fig. 2.

Accordingly, the air-permeable porous body of the present invention has a composition specified by 70 to 88 wt% of $SiO_2$, 5 to 23wt% of CaO, and 5 to 15 wt% of $Al_2O_3$. It also has a uniform pore diameter in the range of 0.3 to 50 μm.

The air-permeable porous body of the present invention is produced from inexpensive, naturally occuring siliceous agalmatolite (preferably pyrophyllite type and/or kaolin type, containing less than 13wt% of $Al_2O_3$), limestone, and clay. These raw materials are mixed into a compound composed of 70 to 88 wt% of $SiO_2$, 5 to 23 wt% of CaO, and 5 to 15wt% of $Al_2O_3$. The compound is incorporated with an organic binder, according to need, and then molded in the usual way. The molded item is fired at 1000°C or above, preferably 1000°C to 1200°C. In the course of firing, reactions take place between the liquid phase and solid phase to give an air-permeable porous body having a uniform pore diameter.

The pore diameter of the porous body is closely related with the particle diameter and particle diameter distribution of the starting materials. According to the results of the experiments carried out by the present inventors, there is a tendency that the closer the particle size distribution of siliceous agalmatolite to the particle size distribution of limestone, the more uniform the pore diameters of the fired body. Therefore, it is possible to obtain a porous body having a certain pore diameter as desired, if siliceous agalmatolite and limestone having a desired particle size distribution are selected as the starting materials. The raw material used in the process of the present invention can be obtained from normally ball-milled powders without classification.

The pressure casting mold of the present invention is made of porous ceramics having the above-mentioned composition. This porous ceramics has a narrow distribution of pore diameters, and the pores provide a uniform pneumatic pressure or hydraulic pressure to the entire surface of the mold when the cast item formed in the mold is demolded.

The pressure casting mold of the present invention is produced in the following manner. At first, the surface layer is prepared. The surface layer is a sintered air-permeable porous body containing 70 to 88 wt% of $SiO_2$, 5 to 23 wt% of CaO, and 5 to 15 wt% of $Al_2O_3$. The surface layer has a uniform pore diameter in the range of 0.3 to 50 µm. The surface layer is produced from inexpensive, naturally occurring siliceous agalmatolite (preferably pyrophyllite type and/or kaolin type, containing less than 13 wt% of $Al_2O_3$), limestone, and clay. These raw materials are mixed into a compound composed of 70 to 88 wt% of $SiO_2$, 5 to 23 wt% of CaO, and 5 to 15 wt% of $Al_2O_3$. The compound is incorporated with an organic binder, according to need, and then molded by drain casting so that the mold has the desired internal configuration. The molded item is fired at 1000°C or above. In the course of firing, reactions take place between the liquid phase and solid phase to an air-permeable porous body having a uniform pore diameter.

In the meantime, the pore diameter of the porous body is closely related with the particle diameter and particle diameter distribution of the starting materials. As explained above in relation to the porous body, according to the results of the experiments carried out by the present inventors, there is a tendency that the closer the particle size distribution of siliceous agalmatolite to the particle size distribution of limestone, the more uniform the pore diameters of the fired body. Therefore, it is possible to obtain the surface layer having a certain pore diameter as desired, if siliceous agalmatolite and limestone having a desired particle size distribution are selected as the starting materials. The raw materials used in the process of the present invention can be obtained from normally ball-milled powders without classification.

After the surface layer of the pressure casting mold has been prepared as mentioned above, drain pipes are arranged and fixed on the back of the surface layer which is in contact with the support layer. The drain pipes are arranged at regular intervals of 10 to 40 mm, so that they uniformly drain water through the entire surface layer and also provide pneumatic pressure of hydraulic pressure to the entire surface layer. The drain pipes are made of cotton or glass fiber knitted in tubular form.

The back of the surface layer is surrounded by a proper container, and the space between the back and the container is filled with a self-curing compound, followed by curing. A preferred example of the self-curing compound is a room temperature curing epoxy resin containing a filler. A preferred example of the filler is silica sand. The filler is added in an amount of 100 to 500 parts by weight for 100 parts by weight of the epoxy resin. Upon curing of the self-curing compound, there is obtained the pressure casting mold according to the present invention.

For the increased bond strength between the surface layer and the support layer, it is recommended that a primer (e.g., epoxy-type primer) be applied to the back of the surface layer. It is also recommended that the back of the surface layer be provided with projections such as stud bolts which produce the anchoring effect.

In the above-mentioned process, the drain pipes can be arranged and fixed on the back of the surface layer in any of the following three manners.

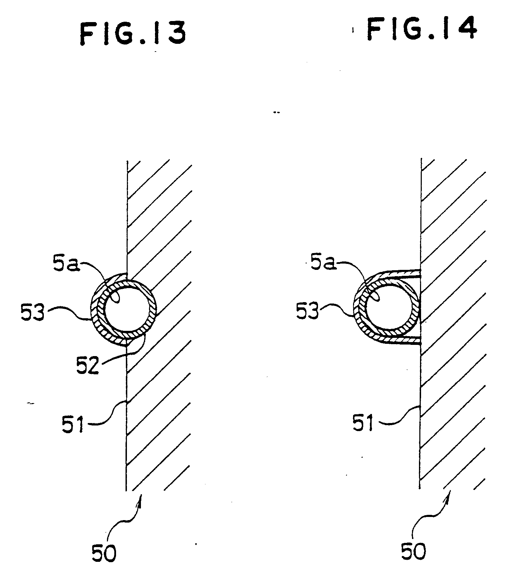

(a) on the back *51* of the surface layer *50* is formed a groove *52* as deep as one half the diameter of the drain pipe *5a*, as shown in Fig. 13. To this groove *52* is fitted the drain pipe *5a*. The exposed external surface of the pipe *5a* is entirely coated with a viscous expoxy resin *53* or the like. The epoxy resin *53* fixes the pipe *5a* to the surface layer *50* and also prevents air from leaking toward the support layer *60*. The epoxy resin should preferably be one having a low flowability; otherwise, a highly flowable epoxy resin infiltrates into the gap between the pipe *5a* and the groove *52*, interfering with the flow of air and water across the pipe *5a* and the surface layer *50*.

(b) This is a modification of method (a) mentioned above. On the back *51* of the surface layer *50* is formed a groove *52* deep enough to receive the drain pipe *5a* completely. The pipe *5a* fitted into the groove *52* is entirely covered with an epoxy resin *53*.

(c) To the black *51* of the surface layer *50* is attached the drain pipe *5a*. The pipe *5a* is fixed with an epoxy resin *53*, as shown in Fig. 14.

Brief Description of the Drawings

Fig. 1 is a diagram showing the range of the pore diameters of porous bodies produced by the conventional process.

Fig. 2 is a phase diagram of the $CaO-Al_2O_3-SiO_2$ system.

Fig. 3 is graph in which the apparent porosity and shrinkage of compound A and compound B are plotted against the firing temperature.

Figs. 4(a) and 4(b) show X-Ray diffraction patterns (by powder method) of compound A and compound B, respectively.

Figs. 5(a) and 5(b) are graphs showing the distribution of pore diameters of compound A and compound B, respectively.

Figs. 6(a), 6(b), and 6(c) are graphs showing the distribution of particle diameters of the raw materials used in Example 1.

Fig. 7 is a graph showing the distribution of pore diameters of the porous bodies obtained in Example 1.

Fig. 8 is a graph showing the air permeability of the porous bodies obtained in Example 1.

Fig. 9 is a graph showing the air permeability of the porous body of dual-layer structure and the porous body of the individual constituting layers obtained in Example 2.

Fig. 10 is a sectional view showing the important parts of a drain casting mold.

Fig. 11 is a sectional view showing the drain casting method.

Fig. 12 is a perspective view showing the method of preparing a mold.

Figs. 13 and 14 are sectional views of the surface layer.

Example 1

Porous bodies were prepared as follows according to the process of the present invention.

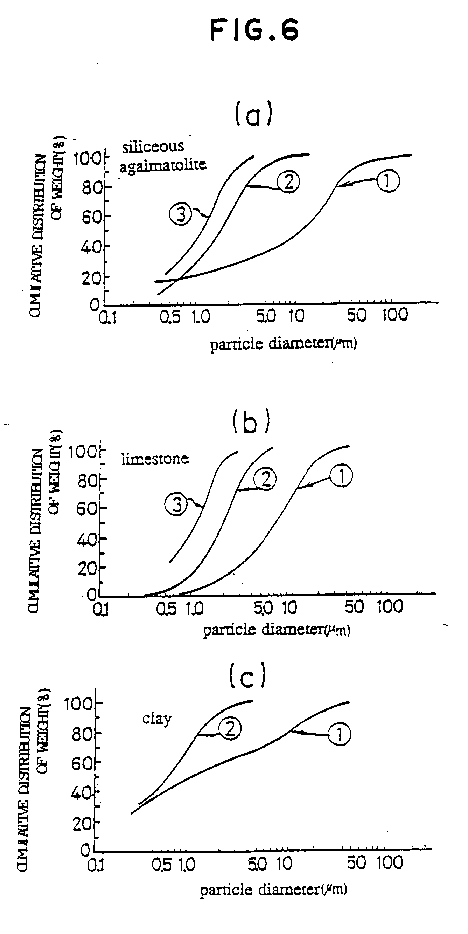

The raw materials (siliceous agalmatolite, limestone, and clay) used in this example have their characteristic particle size distribution (measured by sedimentation method) as shown in Figs. 6(a), 6(b), and 6(c).

Three kinds of siliceous agalmatolite powder were used. The first one indicated by curve (1) in Fig. 6(a) was prepared by ball-milling for 6 hours. The second one indicated by curve (2) in Fig. 6(a) was prepared by ball-milling for 9 hours. The third one indicated by curve (3) in Fig. 6(a) was prepared by ball-milling for 9 hours and further agitation-milling for 6 hours.

Three kinds of limestone powder were used. The first one indicated by curve (1) in Fig. 6(b) was prepared by ball-milling for 6 hours. The second one indicated by curve (2) in Fig. 6(b) was prepared by ball-milling for 9 hours. The third one indicated by curve (3) in Fig. 6(b) was prepared by ball-milling for 9 hours and further agitation-milling for 6 hours.

Two kinds of clay powder were used. The first one indicated by curve (1) in Fig. 6(c) was commercial elutriated Gaerome clay. The second one indicated by curve (2) in Fig. 6(c) was prepared by agitation-milling the commercial elutriated Gaerome clay for 6 hours.

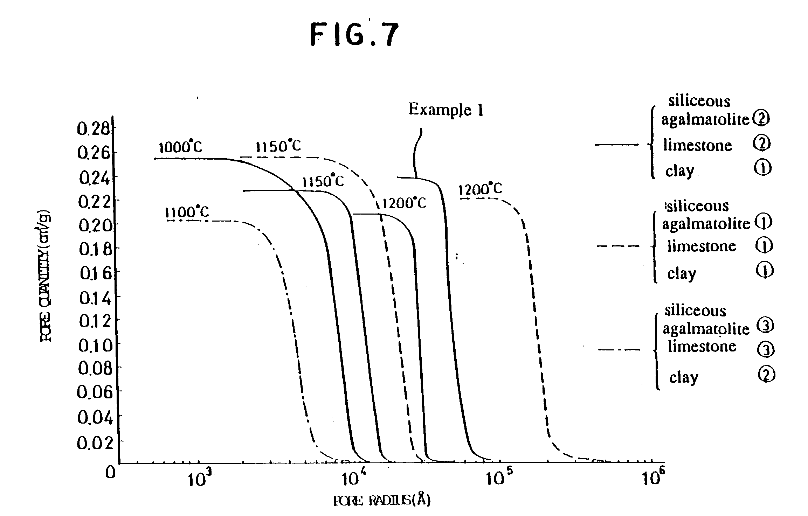

The above-mentioned raw materials were mixed to give a slip composed of 70.2 wt% of agalmatolite, 22.1 wt% of limestone, and 7.7 wt% of clay. The slip was dried. After the addition of 0.7 wt% of PVA and the adjustment of water content to 7 wt%, the compound was press-formed under a pressure of 300 kgf/cm$^2$ (2940 N/cm$^2$). The molded item was fired in an electric furnace. The firing temperature was raised at a rate of 7°C/min and kept at the maximum temperature shown in Fig. 7 for 1 hour. The fired item was allowed to cool naturally in the electric furnace.

The thus obtained porous body was found to be composed of 14.0 wt% of CaO, 74 wt% of SiO$_2$, and 12 wt% of Al$_2$O$_3$.

The porous body has the pore distribution as shown in Fig. 7.

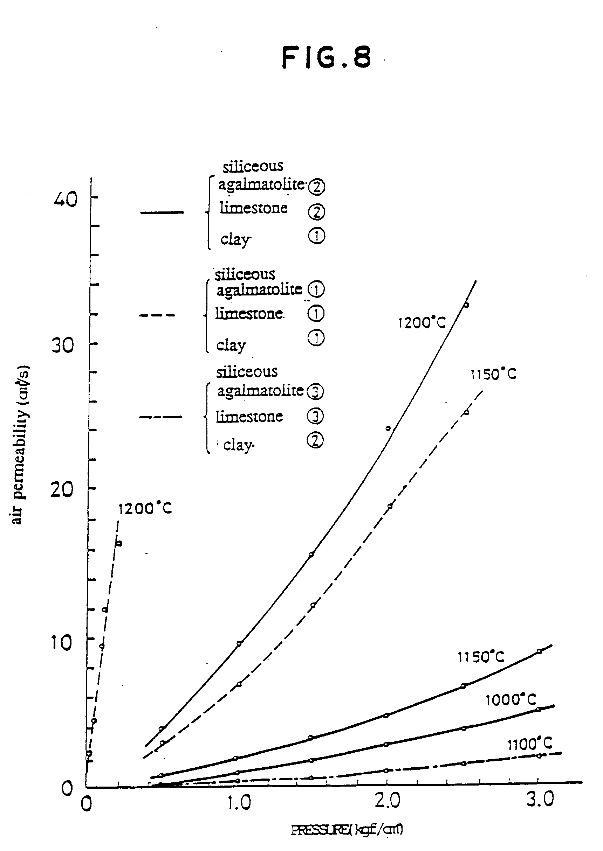

The porous body has the air permeability (per unit area and unit thickness) as shown in Fig. 8.

It is noted from Figs. 7 and 8 that according to the present invention, it is possible to produce highly air-permeable porous bodies having uniform pore diameters from inexpensive raw materials.

Example 2

A porous body of dual-layer structure was prepared in the following manner. At first, a molded item was prepared from a compound composed of siliceous agalmatolite (1), limestone (1), and clay (1) mentioned above. The molded item was fired at 1200°C. One side of the fired item was impregnated with a slip composed of siliceous agalmatolite (2), limestone (2), and clay (1) mentioned above. Finally, the fired item was fired again at 1000°C.

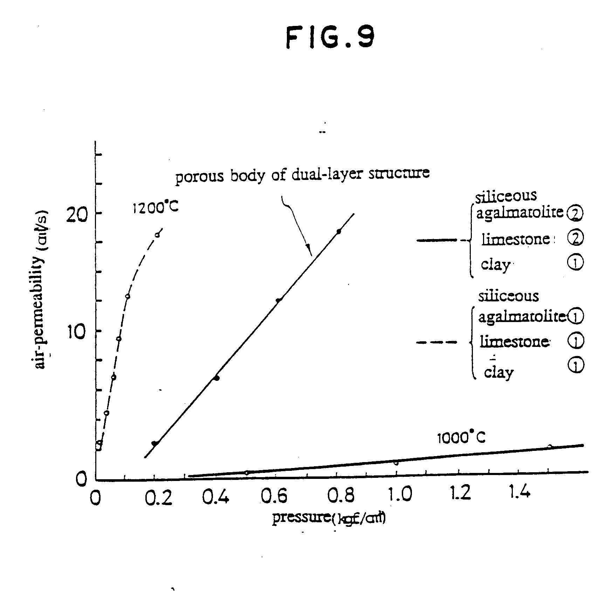

The thus obtained porous body of dual layer structure has the air-permeability as shown in Fig. 9. For comparison, there are also shown the air-permeability of the substrate alone (fired at 1200°C) and the air-permeability of the coating layer alone (fired at 1000°C).

It is noted from Fig. 9 that the porous body of dual-layer structure has a lower pressure loss for the same pore diameter.

Example 3

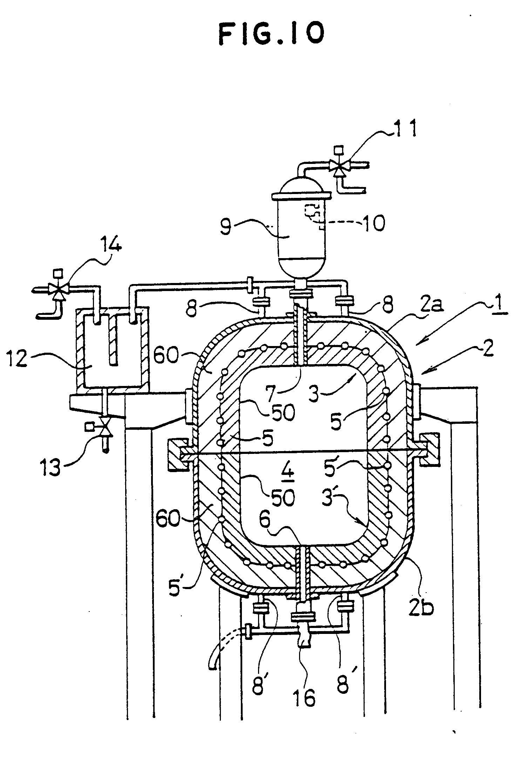

A drain casting mold as shown in Fig. 10 was prepared in the following manner. At first, the surface layer of porous ceramics were prepared from siliceous agalmatolite, limestone, and clay.

The raw materials were pulverized individually by ball-milling for 6 hours. The resulting powders were found to have the particle size distribution (measured by sedimentation method) as indicated by curve (1) in Figs. 6(a), 6(b), and 6(c).

The above-mentioned raw materials were mixed at a ration of 70.2 wt% of siliceous agalmatolite, 22.1 wt% of limestone, and 7.7 wt% of clay. The mixture was incorporated with 400 g of water for 1 kg of the raw materials on dry basis, to give a slurry by thorough mixing.

A cast item was produced from this slurry by slip casting method using a gypsum mold. The cast item was dried at normal temperature for 10 days and then fired in an electric furnace. The firing temperature was raised at a rate of 1.5°C/min and kept at 1180°C for 1 hour. The furnace temperature was lowered at a rate of 2°C/min.

The thus obtained surface layer is 20 mm thick and is composed of 14.0 wt% of CaO, 74 wt% of $SiO_2$, and 12 wt% of $Al_2O_3$. It has also a porosity of 38% and the pore radius distribution as shown in Fig. 7. It should be noted from Fig. 7 that the surface layer has uniform pore radii and high air permeability.

In the second step, to the back of the surface layer were fixed cotton tubes (7 mm in outside diameter) at intervals of 20 to 25 mm as shown in Fig. 13. The back of the surface layer was surrounded by a container. The space between the back of the surface layer and the container was filled with a mixture composed of 160 parts by weight of room temperature curing epoxy resin (100 parts by weight of chief ingredient and 60 parts by weight of hardener) and 300 parts by weight of silica sand (No. 6). The epoxy resin was allowed to stand for 24 hours for curing. Thus there was obtained a drain casting mold of the present invention.

This drain casting mold was mounted on the apparatus shown in Fig. 11, and casting and demolding were carried out according to the procedure mentioned above in connection with the description of Fig. 11. Incidentally, Fig. 10 is a sectional view showing the important part of the drain casting apparatus, with the mold mounted. In Fig. 10, there are shown the surface layer 50 and the support layer 60. In Figs. 10 and 11, like reference characters designate like parts.

The casting pressure was 10 kg/cm² (98 N/cm²) and the casting time was 9 minutes. After casting, the excess slip was drained and pressure was applied to the cast item to make uniform the water content in the cast item. Finally, the cast item was removed from the mold by applying a pneumatic pressure of 2 kg/cm² (19.6 N/cm²) to the drain pipes of the mold. The demolding was accomplished were smoothly.

As mentioned above, the air-permeable porous body of the present invention has extremely uniform pore diameters in the range of 0.3 to 50 µm and also has a very high air permeability. Therefore, it is used as a filter or aerator.

The air-permeable porous body of the present invention can be produced economically and efficiently by the process of the present invention from siliceous agalmatolite, limestone, and clay which are naturally occurring inexpensive raw materials.

Incidentally, the porous body pertaining to the present invention forms cristobalite upon firing and hence it cannot be used at high temperatures above 200°C. However, it can be used satisfactorily at normal temperature as a filter and aerator in the fields of food industry, water treatment, and culture.

The pressure casting mold of the present invention has the surface layer made of the above-mentioned porous body. Therefore, the surface layer has extremely uniform pore diameters in the range of 0.3 to 50 µm and also has a high air permeability. The air-permeable surface layer permits the cast item to be demolded very smoothly.

**Claims**

1. An air-permeable porous body which comprises 70 to 88 wt% of $SiO_2$, 5 to 23 wt% of CaO, and 5 to 15 wt% of $Al_2O_3$.

2. An air-permeable porous body as claimed in Claim 1, which has pore diameters in the range of 0.3 to 50 µm.

3. A process for producing an air-permeable porous body which comprises preparing a compound form siliceous agalmatolite, limestone, and clay, said compound being composed of 70 to 88 wt% of $SiO_2$, 5 to 23 wt% of CaO, and 5 to 15 wt% of $Al_2O_3$, molding the compound, and firing the molded item at 1000°C or above.

4. A process as claimed in Claim 3, wherein the firing temperature is 1000°C to 1200°C.

5. A pressure casting mold which comprises an inner surface layer (50) made of air-permeable porous body, a support layer (60) in close contact with the back (51) of the surface layer (50), and drains (5,5') arranged in the vicinity of the interface between said surface layer (50) and the support layer (60), said drains (5,5') communicating with said surface layer (50) and also with the outside of the pressure casting mold, so that they permit water in said surface layer (50) to be drained and discharged to the outside of the pressure casting mold and also permits a gas or liquid to be emitted from the surface of said surface layer (50), said surface layer being made of sintered porous ceramics comprising of 70 to 88 wt% of $SiO_2$, 5 to 23 wt% of CaO, and 5 to 15 wt% of $Al_2O_3$.

6. A mold as claimed in Claim 5, wherein grooves (52) are formed on the back (51) of said surface layer (50), drain pipes (5a) are half fitted into said grooves (52), and the inside of the drain pipes (5a) functions as said drains (5, 5').

## Patentansprüche

1. Ein luftdurchlässiger poröser Körper, der bis 70 - 88 Gew.-% $SiO_2$, 5 - 23 Gew.-% CaO und 5 - 15 Gew.-% $Al_2O_3$ umfaßt.

2. Ein luftdurchlässiger poröser Körper nach Anspruch 1, der Porendurchmesser im Bereich von 0,3 - 50 μm hat.

3. Ein Verfahren zum Herstellen eines luftdurchlässigen porösen Körpers, welches die Zubereitung einer Zusammensetzung aus Kieselagalmatolit, Kalkstein und Ton umfaßt, wobei diese Zusammensetzung aus 70 - 88 Gew.-% $SiO_2$, 5 - 23 Gew.-% Cao und 5 - 15 Gew.-% $Al_2O_3$ zusammengesetzt ist, und weiterhin das Formen der Zusammensetzung und Brennen des geformten Gegenstandes bei 1000°C oder darüber.

4. Ein Verfahren nach Anspruch 3, bei dem die Brenntemperatur 1000°C - 1200°C beträgt.

5. Eine Druckgußform mit einer inneren oberflächenschicht (50) aus einem luftdurchlässigen porösen Körper, mit einer stützschicht (60) in engem Kontakt mit der Rückseite der Oberflächenschicht und mit Drainagekanälen (5, 5'), die in der Nähe der Zwischenfläche zwischen der Oberflächenschicht (50) und der Stützschicht (60) angeordnet sind, wobei die Drainagekanäle (5, 5') mit der Oberflächenschicht (50) und auch mit der Außenseite der Druckgußform in Verbindung stehen, so daß sie es ermöglichen, Wasser in der Oberflächenschicht (50) abfließen und an der Außenseite der Druckgußform austreten zu lassen, und es ferner ermöglichen, daß ein Gas oder eine Flüssigkelt von der Oberfläche der Oberflächenschicht (50) abgegeben wird, wobei die Oberflächenschicht aus gesintertem, porösem Keramikmaterial gefertigt ist, das 70 - 88 Gew.-% $SiO_2$, 5 - 23 Gew.-% CaO und 5 - 15 Gew.-% $Al_2O_3$ umfaßt.

6. Eine Form nach Anspruch 5, bei der Nuten (52) auf der Rückseite (51) der Oberflächenschicht (50) ausgebildet, Drainagerohre (5a) halb in diese Nuten (52) eingepaßt sind und die Innenseite der Drainagerohre (5a) als Drainagekanal (5, 5') funktioniert.

## Revendications

1. Corps poreux perméable à l'air, qui comprend 70 à 88% en poids de $SiO_3$, 5 à 23% en poids de CaO et 5 à 15% en poids de $Al_2O_3$.

2. Corps poreux perméable à l'air suivant la revendication 1, dont les diamètres de pores se situent dans la plage de 0,3 à 50 μm.

3. Procédé de production d'un corps poreux perméable à l'air, qui consiste à préparer une composition à partir d'agalmatolite siliceuse, de chaux et d'argile, ladite composition étant constituée de 70 à 88% en poids de $SiO_2$, 5 à 23% en poids de CaO et 5 à 15% en poids de $Al_2O_3$, à mouler la composition et à effectuer la cuisson de l'article moulé à une température égale ou supérieure à 1000°C.

4. Procédé suivant la revendication 3, dans lequel la température de cuisson va de 1000 à 1200°C.

5. Moule de coulée sous pression, qui comprend une couche interne de surface (50) constituée d'un corps poreux perméable à l'air, une couche de support (60) en contact étroit avec le dos (51) de la couche de surface (50) et des conduits (5, 5') disposés à proximité de l'interface entre la couche de surface (50) et la couche de support (60), les conduits (5, 5') communiquant avec ladite couche de surface (50) de même qu'avec l'extérieur du moule de coulée sous pression de manière à permettre à l'eau se trouvant dans la couche de surface (50) de s'écouler et d'être déchargée à l'extérieur du moule de coulée sous pression et à permettre également à un gaz ou à un liquide d'être dégagé de la surface de la couche (50), la couche de surface étant réalisée en matière céramique poreuse frittée comprenant 70 à 88% en poids de $SiO_2$, 5 à 23% en poids de CaO et 5 à 15% en poids de $Al_2O_3$.

6. Moule suivant la revendication 5, dans lequel des gorges (52) sont pratiquées au dos (51) de la couche de surface (50), des conduits d'écoulement (5a) sont à demi-engagés dans lesdites gorges (52) et l'intérieur des conduits d'écoulement (5a) fonctionne comme lesdits conduits (5, 5').

# FIG.I

| $10\mathring{A}$ | $10^2\mathring{A}$ | $10^3\mathring{A}$ | $1\mu m$ | $10\mu m$ | $10^2\mu m$ | $10^3\mu m$ |
|---|---|---|---|---|---|---|

I.   One that forms pores before firing

II.   One that forms pores during firing

III.   One that forms pores by phase separation of glass

IV.   One that is based on sol-gel process

V.   One that forms pores utilizing voids in crystals

# FIG.2

# FIG.3

firing temperature(C°)

# FIG.4

(a) compound A

(b) compound B

# FIG.5

(a) compound A

(b) compound B

# FIG.6

(a)

(b)

(c)

FIG.7

# FIG.8

# FIG.9

porous body of dual-layer structure

1200°C

siliceous
agalmatolite ②
—— limestone ②
clay ①

siliceous
agalmatolite ①
- - - limestone ①
clay ①

1000°C

air-permeability (cm/s)

pressure (kgf/cm²)

# FIG.10

# FIG.11

# FIG.12

# FIG.13

# FIG.14

5a

53

52

51

50

5a

53

51

50